# EUROPÄISCHE PATENTSCHRIFT

(11) **EP 1 423 433 B1**
(45) Veröffentlichungstag und Bekanntmachung des Hinweises auf die Patenterteilung: **14.03.2007**
(21) Anmeldenummer: 02772179.4
(22) Anmeldetag: 21.08.2002
(51) Int. Cl.: C08B 11/20, C08B 15/00

(54) **VERFAHREN ZUR HERSTELLUNG NIEDERVISKOSER CELLULOSEETHER DURCH SAUER-OXIDATIVEN ABBAU VON GEMAHLENEN UND GETROCKNETEN CELLULOSEETHERN**
METHOD FOR PRODUCING A CELLULOSE ETHER OF LOW VISCOSITY BY MEANS OF ACID OXIDATIVE DECOMPOSITION OF GROUND AND DRIED CELLULOSE ETHERS
PROCEDE DE PRODUCTION D'UN ETHER DE CELLULOSE DE BASSE VISCOSITE PAR DECOMPOSITION ACIDE OXYDANTE D'ETHERS DE CELLULOSE BROYES ET SECHES

(30) Priorität: 25.08.2001 DE 10141680
(43) Veröffentlichungstag der Anmeldung: 02.06.2004
(73) Patentinhaber: SE Tylose GmbH & Co.KG, 65203 Wiesbaden (DE)
(72) Erfinder: HAMMES, Alf, 65510 Hünstetten-Görsroth (DE)
(74) Vertreter: Plate, Jürgen
(86) Internationale Anmeldenummer: PCT/EP2002/009319
(87) Internationale Veröffentlichungsnummer: WO 2003/018637

(56) Entgegenhaltungen:
- WO-A-00/32637
- DE-A- 19 941 893
- US-A- 3 391 135
- US-A- 4 061 859

## Beschreibung

Verfahren zur Herstellung niederviskoser Celluloseether durch sauer-oxidativen Abbau von gemahlenen und getrockneten Celluloseethern

Die vorliegende Erfindung betrifft ein Verfahren zur Herstellung niederviskoser Celluloseether durch Depolymerisierung mittels sauer-oxidativem Abbau von gemahlenen und getrockneten, also fertig konfektionierten Celluloseethern eines höheren Polymerisationsgrades.

Der Abbau von Celluloseethern mit hohen Polymerisationsgraden ist seit langem bekannt und kann auf mannigfaltige Art erreicht werden. Insbesondere der Abbau zu niedrigstviskosen Produkten hat dabei große Aufmerksamkeit auf sich gezogen, da diese Produkte unter anderem als Coating-Material für Pharmawirkstoffe oder Saatgut, aber auch z.B. als Schutzkolloid in der Emulsionspolymerisation, vorteilhaft eingesetzt werden können. Als niedrigstviskose Produkte werden im folgenden Celluloseether bezeichnet, deren Höppler-Viskosität, gemessen 2,0 %ig (absolut trocken) in Wasser bei 20°C, ≤ 50 mPas beträgt.

Die zum Abbau von Celluloseethern eingesetzten Verfahren umfassen neben der sauer katalysierten hydrolytischen Spaltung der acetalischen Bindung u.a. den oxidativen Abbau sowie den Abbau durch energiereiche Strahlung oder Mikroorganismen/Enzyme.

Verfahren zum oxidativen Abbau von Celluloseethern werden unter anderem in der US-A-2 912 431, der US-A-4 316 982, der CH-B-461 455, der DE-A-20 16 203, der GB-B-953 944 und der DE-A-198 54 770 beschrieben.

In der US-A-2 912 431 wird ein Verfahren beschrieben, bei dem Hypohalite, Peroxide oder Periodate Carboxymethylcellulosen in einem Gemisch mit wässrigem Alkohol bei 40 bis 80°C unter gleichzeitiger Bleichung abbauen.

Der Abbau von wasserfeuchten Celluloseethern mit einem Trockengehalt von 40 bis 75 Gew.-% mit Ozon/Luft/Sauerstoff-Gemischen bei 0 bis 60°C wird in der US-A-4 316 982 beschrieben.

Die CH-B-461 455 beschreibt ein Verfahren, bei dem der Celluloseether bei einem maximalen Wassergehalt von 75 Gew.-% mit 0,1 bis 10 gew.-%iger wässriger Wasserstoffperoxid-Lösung gemischt wird. Das resultierende Gemisch wird dann bei 100 bis 250°C oxidativ abgebaut und getrocknet, bis das H₂O₂ verbraucht ist.
In der DE-A-20 16 203 wird ein Verfahren zum Abbau von Celluloseethern beschrieben, bei dem ein weitestgehend trockenes Pulver mit einem maximalen Wassergehalt von 5 Gew.-% mit einer Hydrogenperoxid-Lösung gemischt und bei 50 bis 150°C abgebaut wird.

Gemäß der GB-B-953 944 wird die Reduktion der Viskosität wasserlöslicher, nicht-ionischer Celluloseether im trockenen oder befeuchteten Zustand durch Umsetzung mit H₂O₂ bei erhöhten Temperaturen erreicht.

Die DE-A-198 54 770 beschreibt ein Verfahren zur Depolymerisierung feuchter Celluloseether bei Temperaturen im Bereich von 60 bis 125°C durch Besprühen mit einer Wasserstoffperoxidlösung.

Der oxidative Abbau von Celluloseethern führt jedoch in der Regel wegen der vergleichsweise großen Einsatzmenge an Oxidationsmittel oder alternativ unverhältnismäßig langen Reaktionszeiten bei unselektiver Kettenspaltung zur Bildung zahlreicher, auch oxidierter Nebenprodukte, welche die Reinheit des *Produktes vermindern.*

Einfache, funktionsgruppenneutrale, hydrolytische Abbauverfahren mit anorganischen oder organischen Säuren werden zum Beispiel in der US-A-1 679 943, der US-A-1 943 461, der EP-A-0 497 985 und der EP-A-0 210 917 beschrieben.

Gemäß der US-A-1 943 461 werden die vorgemahlenen Celluloseether mit einem Vielfachen ihres Gewichtes an verdünnten Säuren oder deren Mischungen (Konzentration: 0,5 bis 5 Gew.-%) in einem geschlossenen Druckkessel für 20 bis 60 Minuten bei 0,7 bis 5,2 bar Druck und Temperaturen von 115 bis 160°C abgebaut. In der US-A-1 679 943 wird der Abbau von Celluloseethern mit unterschiedlichen Säuregemischen beschrieben, wobei weder ein Druckkessel noch eine erhöhte Temperatur benötigt wird. Insbesondere bei Raumtemperatur resultieren jedoch sehr lange Reaktionszeiten, die im Bereich von mehreren Tagen liegen können.

Gemäß der EP-A-0 497 985 werden Zellstoffe mit niedriger Kupferzahl zu Celluloseethern umgesetzt und diese gewaschen, getrocknet, gemahlen und bei einer Temperatur von etwa 70°C mit einer 0,5 gew.-%igen wässrigen HCl-Lösung versetzt. Die resultierenden Celluloseether weisen sehr niedrige Viskositäten auf (< 20 mPas, 2,0 %ig bei 20°C).

Ein ähnliches Verfahren wird in der EP-A-0 210 917 beschrieben. Dort wird ein Celluloseetherpulver, das 3 bis 8 Gew.-% Wasser enthält, mit 0,1 bis 1 Gew.-% einer wässrigen HCl-Lösung bei 40 bis 85°C abgebaut.

Insbesondere der Abbau zu niedrigstviskosen Produkten kann auch durch den Einsatz von HCl als Gas erreicht werden. Derartige Verfahren werden zum Beispiel in der US-A-3 391 135, der US-A-4 061 859 und der WO 00/32637 beschrieben.

Die US-A-3 391 135 offenbart ein Verfahren zur Herstellung von Celluloseethern mit Lösungsviskositäten von weniger als 10 mPas (2,0 %ig bei 20°C) aus höherviskosen Celluloseether-Pulvern mit Wassergehalten kleiner 5 Gew.-% bei 30 bis 80°C. Überschüssiges HCl-Gas wird entfernt und der Celluloseether dann durch Untermischen einer schwachen Base neutralisiert.

Gemäß der US-A-4 061 859 werden Celluloseether als trockene Pulver, mit einem Wassergehalt von 0,01 bis 5 Gew.-%, mit Halogenwasserstoff bei 15 bis 80°C abgebaut und dann durch Untermischen von Natriumbicarbonat oder Einleiten von Ammoniakgas neutralisiert. Die Bleichung des gewonnenen Materials wird mit Schwefeldioxidgas erreicht, mit dem das abgebaute Material nach der Depolymerisierungsstufe in Kontakt gebracht wird. Mit diesem Verfahren können Celluloseether zu niedrigstviskosen Produkten abgebaut werden, deren Anfangsviskosität mehrere Hunderttausend mPas betragen hat. Die der Depolymerisation nachgeschaltete Bleichstufe ermöglicht eine Farbaufhellung der Produkte, bedeutet aber einen zusätzlichen Verfahrensschritt.
In der WO 00/32637 werden Celluloseether unter ständiger Bewegung bei 50 bis 130°C mit Säuren mit dem Ziel der Depolymerisation in Kontakt gebracht.

Der hydrolytische Abbau ist funktionsgruppenneutral und kann zur Produktion niedrigstviskoser Produkte eingesetzt werden. Problematisch ist jedoch generell die Färbung der Produkte, ebenso wie die Bildung von braun-schwarzen Produktklumpen. Diese werden vor allem durch ungleichmäßige Verteilung des Wassers und der Konzentration der Säure in stark wasserhaltigen, verklebten Bereichen gebildet. Ein nachgeschalteter Bleichschritt ist häufig notwendig, um nicht gefärbte Produkte zu erhalten. Dabei werden entweder Oxidationsmittel in Mengen eingesetzt, die den Anteil oxidierter Produktbestandteile signifikant erhöhen, oder durch die Einführung Stickstoff- oder schwefelhaltiger Verbindungen werden zusätzlich neue Nebenprodukte erzeugt.

Eine Kombination aus sauer-hydrolytischem und oxidativem Abbau in konzentriertem, wässrigen Slurry wird in der DE-A-399 41 893 beschrieben. Dabei wird mit einem Wasserüberschuß in einem Zwei-Phasen-System (fest/ flüssig) gearbeitet. Das Gewichtsteile-Verhältnis von Wasser (Slurry-Medium) zu Celluloseether beträgt jedoch maximal 10:1. Man erhält nach diesem Verfahren weitgehend uniforme, salzarme Celluloseether von hohem Weißgrad, allerdings bei verminderter Ausbeute von ca. 80 bis 96 %. Die nachträgliche Abtrennung des depolymerisierten Celluloseethers vom Slurrymedium sowie die notwendige Trocknung und Mahlung des abgebauten Materials sind aufgrund des hohen Wasserrückhaltevermögens, der großen Thermoplastizität und der starken Klebrigkeit der depolymerisierten Produkte sehr schwierig.

Aufgabe der vorliegenden Erfindung war es daher, ein Verfahren zur Depolymerisierung von Celluloseethern bereitzustellen, das nicht die genannten Nachteile des Standes der Technik aufweist. Insbesondere wurde nach Möglichkeiten gesucht, niedrigstviskose Celluloseether (≤ 50 mPas), die neben möglichst geringen Mengen oxidierter Bestandteile einen hohen Weißgrad besitzen, aus höherviskosen Celluloseethern (> 50 mPas bis mehrere 100000 mPas) in quantitativer Ausbeute herzustellen. Ferner sollte die bei den niedrigstviskosen Produkten problematische Trocknung und Mahlung vermieden werden.

Diese Aufgabe wird erfindungsgemäß gelöst durch ein Verfahren zur Depolymerisierung von Celluloseethern durch sauer-oxidativen Abbau, das dadurch gekennzeichnet ist, dass der gemahlene und getrocknete Celluloseether mit gasförmiger Säure begast oder mit der Lösung einer Säure besprüht wird, sowie gleichzeitig mit einem Oxidationsmittel oder einer Lösung eines Oxidationsmittels in Kontakt gebracht wird, dass er bei Temperaturen im Bereich von 50 bis 120°C über eine Zeitdauer im Bereich von 0,01 bis 10 Stunden depolymerisiert wird und anschließend die Säure durch Zugabe einer Base neutralisiert wird, wobei der Wassergehalt des Reaktionsgemisches während der Depolymerisation 10 Gew.-% nicht überschreiten darf.

Überraschenderweise wurde gefunden, dass durch Kombination von saurem und oxidativem Abbau bei Celluloseether-Pulvern mit einem Wassergehalt von unter 10 Gew.-% Weißgrade erzielt werden, wie sie ohne den gleichzeitigen Einsatz von sauren und oxidierenden Reagenzien nicht erreicht werden können. Neben einer effizienten Depolymerisierung bei geringem Säureeinsatz führt die Kombination mit geringen Mengen eines Oxidationsmittels zu einer Erhöhung des Weißgrades der depolymerisierten Produkte unter Begrenzung des Anteils an oxidierten Nebenbestandteilen.

Da der Abbau an fertig konfektioniertem Celluloseether mit einem Wassergehalt von unter 10 Gew.-% durchgeführt wird, ist eine nachträgliche Trocknung und Mahlung/Siebung des Materials nicht notwendig. Man erhält den depolymerisierten Celluloseether in quantitativer Ausbeute. Der Vorteil gegenüber dem in der DE-A-199 41 893 beschriebenen Verfahren liegt also insbesondere in der quantitativen Ausbeute an depolymerisiertem Produkt, der Vermeidung von belastetem Abwasser, dem deutlich verminderten Säureeinsatz sowie der entfallenden, problematischen Trocknung und Mahlung des depolymerisierten Celluloseethers.

Als Celluloseether können erfindungsgemäß alle bekannten Celluloseether eingesetzt werden, die heißwasser-flockbar sind und damit mit Wasser einer Temperatur oberhalb ihres Flockpunktes von Salz befreit werden können.

Bevorzugt sind Alkylcellulosen, wie z.B. Methyl-, Ethyl- und Propylcellulose, sowie Mischether derselben, wie z.B. Hydroxyethylmethyl-, Hydroxypropylmethyl-, Ethylhydroxyethyl- und Ethylmethylcellulose.

Der Polymerisationsgrad sowie die Viskosität der einzusetzenden Celluloseether ist nicht beschränkt. Als hochviskose Ausgangsmaterialien für die Depolymerisierung werden jedoch vorzugsweise Celluloseether verwendet, deren Viskosität in 2,0 %iger wässriger Lösung mehr als 50 mPa·s beträgt.

Besonders bevorzugt werden erfindungsgemäß Celluloseether eingesetzt, die durch a) Alkalisierung einer Cellulose mit 0,5 bis 10 Moläquivalenten Alkali,
b) Veretherung der erhaltenen Alkalicellulose mit Veretherungsmitteln,
c) Reduktion des Salzgehaltes auf unter 0,5 Gew.-% durch Auswaschen des Celluloseethers mit Wasser einer Temperatur oberhalb des Flockpunktes des Celluloseethers und Abtrennung des Feststoffes von der Salzlösung durch Zentrifugation oder Filtration, so dass der Wassergehalt im Feststoff im Bereich von 25 bis 80 Gew.-% liegt, und
d) Gleichzeitiges Trocknen und Mahlen des feuchten Celluloseethers bei Temperaturen im Bereich von 50 bis 120°C mit Hilfe einer Mahltrocknungsapparatur, so dass ein Feuchtigkeitsgehalt von unter 10 Gew.-% resultiert,
erhalten werden.
Ein weiterer Vorteil des erfindungsgemäßen Verfahrens gegenüber herkömmlichen Verfahren beruht auf der Tatsache, dass als Ausgangszellstoffe auch Holzzellstoffe mit niedrigem α-Cellulosegehalt verwendet werden können und trotzdem Produkte mit hohem Weißgrad resultieren. Ist nämlich der α-Cellulosegehalt zu niedrig, was insbesondere bei Holzzellstoffen geringer Qualität der Fall ist, erhält man mit Verfahren gemäß dem Stand der Technik in der Regel gefärbte Produkte. Die Färbung ist umso intensiver, je niedriger die Viskosität des depolymerisierten Celluloseethers ist. Zwar ist es möglich, dieses Problem bei Verfahren nach dem Stand der Technik zu minimieren, indem Linterszellstoffe mit hohem α-Cellulosegehalt (> 99 %) eingesetzt werden, diese sind jedoch teuer und erniedrigen die Wirtschaftlichkeit des Verfahrens. Erfindungsgemäß werden vorzugsweise Zellstoffe mit einem α-Cellulosegehalt von 90 bis 99,9 % verwendet werden, besonders bevorzugt aber Zellstoffe mit einem Gehalt von 95 bis 98 %.

In einer besonders bevorzugten Ausführungsform werden durch das erfindungsgemäße Verfahren niedrigstviskose Celluloseether hergestellt, die Höppler-Viskositäten, gemessen 2,0 %ig (absolut trocken) in Wasser bei 20°C von ≤ 50 mPa·s aufweisen.

Geeignet als Säuren für den hydrolytischen Abbau sind sowohl Mineralsäuren als auch organische Säuren sowie Gemische derselben. Bevorzugt sind jedoch Mineralsäuren.

Als Mineralsäuren werden vorzugsweise Salzsäure, Schwefelsäure, Salpetersäure sowie Phosphorsäure eingesetzt. Es können aber auch Gemische derselben verwendet werden.

Als starke organische Säuren werden vorzugsweise Trifluoressigsäure, Essigsäure, Ameisensäure, Oxalsäure, Phthalsäure, Maleinsäure sowie Benzoesäure eingesetzt. Es können aber auch Gemische derselben verwendet.

Die eingesetzte Säuremenge liegt vorzugsweise im Bereich von 0,01 bis 2 Gew.-% reine Säure, bezogen auf die eingesetzte Menge Celluloseether. Besonders bevorzugt werden jedoch weniger als 1 Gew.-% und insbesondere weniger als 0,5 Gew.-% Säure eingesetzt. Es werden bevorzugt Säuren eingesetzt, deren pKs < 5,0 ist.

Das Begasen des Celluloseethers mit der gasförmigen Säure bzw. das Besprühen mit der Säurelösung erfolgt dabei vorzugsweise bei Temperaturen im Bereich von 20 bis 120°C.

Als Oxidationsmittel werden vorzugsweise Wasserstoffperoxid sowie deren Salze, andere Peroxoverbindungen, wie z.B. Natriumperoxosulfat, Ozon, Perborate (auch in Kombination mit Aktivatoren wie z.B. TAED), Natriumchlorit, Halogene, Halogenoxide sowie andere, zur Bleichung verwendete, Verbindungen eingesetzt. Besonders bevorzugt sind Wasserstoffperoxid (H₂O₂) und Ozon (O₃).

Wird als Oxidationsmittel nämlich Wasserstoffperoxid verwendet, so zersetzt sich dieses im Verlauf der Reaktion rückstandsfrei zu Wasser und Sauerstoff. Es werden keine weiteren Nebenprodukte gebildet, die die Einsetzbarkeit der depolymerisierten Celluloseether beschränken. Dies ist besonders wichtig, da die Produkte in großem Umfang im Pharma- und Lebensmittelbereich eingesetzt werden. Für Ozon gelten ähnliche Überlegungen bezüglich der Rückstandsfreiheit.

Die Oxidationsmittel werden vorzugsweise in Mengen von 0,01 bis 3 Gew.%, besonders bevorzugt von 0,2 bis 1,5 Gew.-% und insbesondere von 0,5 bis 1,0 Gew.-%, bezogen auf den Celluloseether, eingesetzt.

Der erfindungsgemäße, sauer-katalysierte, hydrolytisch-oxidative Abbau wird vorzugsweise bei Temperaturen im Bereich von 50 bis 120°C durchgeführt. Besonders bevorzugt sind Temperaturen im Bereich von 60 bis 110°C.

Der erfindungsgemäße, sauer-katalysierte, hydrolytisch-oxidative Abbau wird vorzugsweise bei Drücken im Bereich von 100 bis 1030 mbar durchgeführt. Besonders bevorzugt sind Drücke im Bereich von 950 bis 1030 mbar.

Wässrige Lösungen der abgebauten Celluloseether weisen im allgemeinen durch Generierung saurer Gruppen am Celluloseether-Grundgerüst schwach saure pH-Werte auf. Der pH-Wert solcher Lösungen kann auf einen weitgehend neutralen pH-Wert von 5,5 bis 8,0 eingestellt werden, indem man nach der Depolymerisierung mindestens ein basisches Salz, wie zum Beispiel Natriumcarbonat oder Natriumhydrogencarbonat, zumischt. Das mindestens eine basische Salz wird dabei vorzugsweise als Pulver zugesetzt und zwar in Mengen von 0,1 bis 2,0, besonders bevorzugt 0,5 bis 1,0, Moläquivalenten, bezogen auf die eingesetzte Säuremenge.

Die Viskosität der resultierenden Produkte kann im wesentlichen über die eingesetzten Mengen an Säure und Oxidationsmittel, die Reaktionszeit sowie die Reaktionstemperatur eingestellt werden und ist sehr gut reproduzierbar.

Die Erfindung wird im folgenden anhand von Ausführungsbeispielen näher beschrieben, ohne dadurch jedoch beschränkt zu werden.

Die Viskositäten der in den Beispielen hergestellten Celluloseether werden, sofern nichts anderes angegeben ist, in wässriger Lösung (2,0 %ig, bezogen auf den reinen Celluloseether, bei 20°C) mit einem Höppler-Kugelfall-Viskosimeter der Firma Haake gemessen.

Die angegebenen Säuremengen beziehen sich auf Gew.-% reine HCl, bezogen auf die eingesetzte Menge Celluloseether. Die angegebenen Mengen Oxidationsmittel (H₂O₂) beziehen sich ebenfalls auf Gew.-% reines H₂O₂, bezogen auf die eingesetzte Menge Celluloseether.

### Beispiele

### Beispiel 1

### Herstellung eines hochviskosen Celluloseethers

2,7 kg eines Holzzellstoffes mit ca. 3 Gew.-% Feuchte wurden in einem Reaktor mit liegender Mischerwelle in 11,5 kg Dimethylglykol unter Stickstoffatmosphäre vorgelegt und 0,23 kg Wasser sowie 1,87 kg einer konzentrierten Natronlauge (49,6 %ig) zugegeben. Nach 30 Minuten wurden 0,56 kg Propylenoxid zugegeben, das Gemisch auf 80°C erhitzt und bei dieser Temperatur für 60 Minuten gehalten. Es wurden dann weitere 4,3 kg 49,6 %ige Natronlauge und 3,67 kg Methylchlorid zugegeben, auf 100°C erhitzt und für 60 Minuten bei dieser Temperatur umgesetzt. Nach beendeter Umsetzung wurde das Dimethylglykol unter reduziertem Druck abdestilliert und das Rohprodukt mit mehreren Portionen kochendem Wasser (insgesamt 100 kg), ausgewaschen und jeweils vom Slurry abgetrennt. Die Restfeuchte betrug bei der Abtrennung des Feststoffes vom Slurry ca. 55 bis 65 Gew.-%, der Restsalzgehalt nach dem letzten Auswaschungsschritt 0,1 Gew.-%. Das so erhaltene Material wurde auf einer Pallmann-Mühle des Typs PPSR, die auf 80°C vorgeheizt ist, gemahlen und gleichzeitig getrocknet, so dass ein feinkörniges Celluloseetherpulver anfiel, dessen Restfeuchte ca. 1 bis 3 Gew.-% betrug. Der OCH₃-Gehalt betrug 29,7 %, der OC₃H₆-Gehalt 10,2 % und die Viskosität 2600 mPa·s, gemessen an einer 1,9 %igen wässrigen Lösung.

Depolymerisation des hochviskosen Celluloseethers des Beispiels 1 zu niedrigstviskosen Celluloseethern:

### Vergleichsbeispiel 2a

100 g des Celluloseetherpulvers aus Beispiel 1 wurden, unter Berücksichtigung des schon enthaltenen Wassers, mit 0,25 Gew.-% HCl in Form einer wässrigen Lösung besprüht, so dass der Gesamtwassergehalt des Systems 5,0 Gew.-% betrug. Das Material wurde in einen Glasbehälter überführt und für 2 Stunden bei einer Ölbadtemperatur von 110°C in ständiger Bewegung gehalten. Nach der Depolymerisation wurde mit der 0,7 fachen Moläquivalentmenge Natriumcarbonat, bezogen auf die Menge zugesetzter HCl, versetzt und nochmals für wenige Minuten vermischt.
Es resultierte ein niedrigstviskoser Celluloseether mit den in Tabelle 1 angegebenen Kenndaten.

### Beispiel 2b

100 g des Celluloseetherpulvers aus Beispiel 1 wurden, unter Berücksichtigung des schon enthaltenen Wassers, mit 0,25 Gew.-% HCl in Form einer wässrigen Lösung und danach mit einer verdünnten H₂O₂-Lösung (0,7 g reines H₂O₂) besprüht, so dass der Gesamtwassergehalt des Systems 5,0 Gew.-% betrug. Das Material wurde in einen Glasbehälter überführt und für 2 Stunden bei einer Ölbadtemperatur von 110°C in ständiger Bewegung gehalten. Nach der Depolymerisation wurde mit der 0,7-fachen Moläquivalentmenge Natriumcarbonat, bezogen auf die Menge zugesetzter HCl, versetzt und nochmals für wenige Minuten vermischt.

Es resultierte ein niedrigstviskoser Celluloseether mit den in Tabelle 1 angegebenen Kenndaten.

### Vergleichsbeispiel 3a

100 g des Celluloseetherpulvers aus Beispiel 1 wurden, unter Berücksichtigung des schon enthaltenen Wassers, mit 0,5 Gew.% HCl in Form einer wässrigen Lösung besprüht, so dass der Gesamtwassergehalt des Systems 5,0 Gew.-% betrug. Das Material wurde in einen Glasbehälter überführt und für 3 Stunden bei einer Ölbadtemperatur von 100°C in ständiger Bewegung gehalten. Nach der Depolymerisation wurde mit der 0,7 fachen Moläquivalentmenge Natriumcarbonat, bezogen auf die Menge zugesetzter HCl, versetzt und nochmals für wenige Minuten vermischt.

Es resultierte ein niedrigstviskoser Celluloseether mit den in Tabelle 1 angegebenen Kenndaten.

### Beispiel 3b

100 g des Celluloseetherpulvers aus Beispiel 1 wurden, unter Berücksichtigung des schon enthaltenen Wassers, mit 0,5 Gew.-% HCl in Form einer wässrigen Lösung und danach mit einer verdünnten H₂O₂-Lösung (1,05 g reines H₂O₂) besprüht, so dass der Gesamtwassergehalt des Systems 5,0 Gew.-% betrug. Das Material wurde in einen Glasbehälter überführt und für 3 Stunden bei einer Ölbadtemperatur von 100°C in ständiger Bewegung gehalten. Nach der Depolymerisation wurde mit der 0,7 fachen Moläquivalentmenge Natriumcarbonat, bezogen auf die Menge zugesetzter HCl, versetzt und nochmals für wenige Minuten vermischt.

Es resultierte ein niedrigstviskoser Celluloseether mit den in Tabelle 1 angegebenen Kenndaten.

**Tabelle 1**

| Bsp.- Nr. | HCl (rein) [Gew.-%] | H₂O₂ (rein) [Gew.-%] | Endviskosität 2,0 %ig [mPa·s] | Weißgrad Pulver¹⁾ | Färbung der Lösung ²⁾ |
|---|---|---|---|---|---|
| 2a | 0,25 | - | 35 | 77 | 0,09 |
| 2b | 0,25 | 0,7 | 35 | 83 | 0,04 |
| 3a | 0,5 | - | 3 | 60 | 0,24 |
| 3b | 0,5 | 1,05 | 3 | 71 | 0,09 |

### Bestimmungsmethoden:

### ¹⁾ Weißgrad Pulver:

Grundlage der Messung ist DIN 5033; Messung mit Color Tester LFM1 der Fa. Dr. Lange gegen Emaille-Weißstandard (Einstellung: 82,7 % Remission) durch Messung der Remission bei definierter Wellenlänge, Blaufilter (447 nm), Normallichtart C; Reproduzierbarkeit +/- 0,5.
Wegen des farbaufhellenden Effektes bei der Verschiebung der Komgrößenverteilung zu kleineren Werten dürfen nur Produkte vergleichbarer Komgrößenverteilungen in Bezug auf den Weißgrad direkt miteinander verglichen werden.

### ²⁾ Färbung der Lösung:

Messung mit UV-/VlS-Spektralphotometer CADAS 100 der Fa. Dr. Lange, 2,0 gew.-%ige Lösung des Celluloseethers in Wasser, Küvettendicke 2 cm durch Messung der Extinktion bei 415 und 578 nm (20°C) und Bildung der Differenz. Je größer der Wert, desto gelber die Lösung. Die Färbung der Lösung ist von der Korngrößenverteilung des Pulvers unabhängig. Sie wird jedoch umso intensiver, je stärker das Material depolymerisiert ist. Aus diesem Grund sollten nur Celluloseether vergleichbarer Viskosität bei gleicher Konzentration miteinander verglichen werden.

## Patentansprüche

1. Verfahren zur Depolymerisierung von Celluloseethern durch sauer-oxidativen Abbau, **dadurch gekennzeichnet, dass** der gemahlene und getrocknete Celluloseether mit gasförmiger Säure begast oder mit der Lösung einer Säure besprüht wird, sowie gleichzeitig mit einem Oxidationsmittel oder einer Lösung eines Oxidationsmittels in Kontakt gebracht wird, dass er bei Temperaturen im Bereich von 50 bis 120°C über eine Zeitdauer im Bereich von 0,01 bis 10 Stunden depolymerisiert wird und dass anschließend die Säure durch Zugabe einer Base neutralisiert wird, wobei der Wassergehalt des Reaktionsgemisches während der Depolymerisation 10 Gew.-% nicht überschreiten darf.

2. Verfahren gemäß Anspruch 1, **dadurch gekennzeichnet, dass** als Celluloseether Methyl-, Ethyl-, Propyl-, Hydroxyethylmethyl-, Hydroxypropylmethyl-, Ethylhydroxyethyl- oder Ethylmethylcellulose eingesetzt wird.

3. Verfahren gemäß Anspruch 1 oder 2, **dadurch gekennzeichnet, dass Celluloseether eingesetzt werden, die durch**
a) Alkalisierung einer Cellulose mit 0,5 bis 10 Moläquivalenten Alkali,
b) Veretherung der erhaltenen Alkalicellulose mit Veretherungsmitteln,
c) Reduktion des Salzgehaltes auf unter 0,5 Gew.-% durch Auswaschen des Celluloseethers mit Wasser einer Temperatur oberhalb des Flockpunktes des Celluloseethers und Abtrennung des Feststoffes von der Salzlösung durch Zentrifugation oder Filtration, so dass der Wassergehalt im Feststoff im Bereich von 25 bis 80 Gew.-% liegt, und
d) Gleichzeitiges Trocknen und Mahlen des feuchten Celluloseethers bei Temperaturen im Bereich von 50 bis 120°C mit Hilfe einer Mahltrocknungsapparatur, so dass ein Feuchtigkeitsgehalt von unter 10 Gew.-% resultiert,
erhalten werden.

4. Verfahren gemäß Anspruch 3, **dadurch gekennzeichnet, dass** in Schritt a) eine Cellulose mit einem α-Cellulosegehalt von 90 bis 99,9 % eingesetzt wird.

5. Verfahren gemäß mindestens einem der vorhergehenden Ansprüche, **dadurch gekennzeichnet, dass** der depolymerisierte Celluloseether eine Höppler-Viskosität, gemessen 2,0 %ig (absolut trocken) in Wasser bei 20°C, von ≤ 50 mPa·s aufweist.

6. Verfahren gemäß mindestens einem der vorhergehenden Ansprüche, **dadurch gekennzeichnet, dass** als Säuren Mineralsäuren und/oder organische Säuren eingesetzt werden.

7. Verfahren gemäß Anspruch 6, **dadurch gekennzeichnet, dass** als Mineralsäuren Salz-, Schwefel-, Salpeter- und/oder Phosphorsäure eingesetzt werden.

8. Verfahren gemäß Anspruch 6, **dadurch gekennzeichnet, dass** als organische Säuren Trifluoressigsäure, Essigsäure, Ameisensäure, Oxalsäure, Phthalsäure, Maleinsäure und/oder Benzoesäure eingesetzt werden.

9. Verfahren gemäß mindestens einem der vorhergehenden Ansprüche, **dadurch gekennzeichnet, dass** die Säure in einer Menge im Bereich von 0,01 bis 2 Gew.-% reine Säure, bezogen auf den eingesetzten Celluloseether, eingesetzt wird.

10. Verfahren gemäß mindestens einem der vorhergehenden Ansprüche, **dadurch gekennzeichnet, dass** als Oxidationsmittel Peroxoverbindungen, Ozon, Perborate, Natriumchlorit, Halogene und/oder Halogenoxide eingesetzt werden.

11. Verfahren gemäß Anspruch 10, **dadurch gekennzeichnet, dass** als Oxidationsmittel Wasserstoffperoxid eingesetzt wird.

12. Verfahren gemäß Anspruch 10, **dadurch gekennzeichnet, dass** als Oxidationsmittel Ozon eingesetzt wird.

13. Verfahren gemäß mindestens einem der vorhergehenden Ansprüche, **dadurch gekennzeichnet, dass** das Oxidationsmittel in einer Menge von 0,01 bis 3 Gew.-%, bezogen auf den Celluloseether, eingesetzt wird.

14. Verfahren gemäß mindestens einem der vorhergehenden Ansprüche, **dadurch gekennzeichnet, dass** der sauer-katalysierte, hydrolytisch-oxidative Abbau bei Temperaturen im Bereich von 50 bis 120°C durchgeführt wird.

15. Verfahren gemäß mindestens einem der vorhergehenden Ansprüche, **dadurch gekennzeichnet, dass** der sauer-katalysierte, hydrolytisch-oxidative Abbau bei Drücken im Bereich von 100 bis 1030 mbar durchgeführt wird.

16. Verfahren gemäß mindestens einem der vorhergehenden Ansprüche, **dadurch gekennzeichnet, dass** nach der Depolymerisation 0,1 bis 2,0 Moläquivalente mindestens eines basischen Salzes, bezogen auf die eingesetzte Säuremenge, zugegeben werden.

17. Verfahren gemäß Anspruch 16, **dadurch gekennzeichnet, dass** als basisches Salz Natriumcarbonat und/oder Natriumhydrogencarbonat eingesetzt wird.

## Claims

1. A method for the depolymerization of cellulose ethers by acid oxidative decomposition, **characterized in that** the ground and dried cellulose ether is exposed to gaseous acid or is sprayed with a solution of an acid, and is simultaneously brought into contact with an oxidizing agent or a solution of an oxidizing agent, **in that** it is depolymerized at temperatures in the range from 50 to 120°C over a period in the range from 0.01 to 10 hours, and **in that** subsequently the acid is neutralized by adding a base, it not being permissible for the water content of the reaction mixture to exceed 10 % by weight during the depolymerization.

2. The method as claimed in claim 1, **characterized in that** methyl-, ethyl-, propyl-, hydroxyethylmethyl-, hydroxypropylmethyl-, ethylhydroxyethyl-or ethylmethylcellulose is employed as cellulose ether.

3. The method as claimed in claim 1 or 2, **characterized in that** the cellulose ethers employed are obtained by
a) alkalization of a cellulose with 0.5 to 10 mole equivalents of alkali,
b) etherification of the resulting alkali cellulose with etherifying agents,
c) reduction of the salt content to below 0.5 % by weight by washing the cellulose ether with water at a temperature above the cloud point of the cellulose ether and removing the solid from the salt solution by centrifugation or filtration, so that the water content in the solid is in the range from 25 to 80 % by weight, and
d) simultaneous drying and grinding of the moist cellulose ether at temperatures in the range from 50 to 120 °C with the aid of a grinding/drying apparatus to result in a moisture content below 10 % by weight.

4. The method as claimed in claim 3, **characterized in that** a cellulose having an α-cellulose content of from 90 to 99.9 % is employed in step a).

5. The method as claimed in at least one of the preceding claims, **characterized in that** the depolymerized cellulose ether has a Höppler viscosity measured at a concentration of 2.0 % (absolutely dry) in water at 20°C of ≤ 50 mPa·s.

6. The method as claimed in at least one of the preceding claims, **characterized in that** mineral acids and/or organic acids are employed as acids.

7. The method as claimed in claim 6, **characterized in that** hydrochloric, sulfuric, nitric and/or phosphoric acids are employed as mineral acids.

8. The method as claimed in claim 6, **characterized in that** trifluoroacetic acid, acetic acid, formic acid, oxalic acid, phthalic acid, maleic acid and/or benzoic acid are employed as organic acids.

9. The method as claimed in any one of the preceding claims, **characterized in that** the acid is employed in an amount in the range from 0.01 to 2 % by weight of pure acid, based on the cellulose ether employed.

10. The method as claimed in at least one of the preceding claims, **characterized in that** peroxo compounds, ozone, perborates, sodium chlorite, halogens and/or halogen oxides are employed as oxidizing agents.

11. The method as claimed in claim 10, **characterized in that** hydrogen peroxide is employed as oxidizing agent.

12. The method as claimed in claim 10, **characterized in that** ozone is employed as oxidizing agent.

13. The method as claimed in at least one of the preceding claims, **characterized in that** the oxidizing agent is employed in an amount of from 0.01 to 3 % by weight based on the cellulose ether.

14. The method as claimed in at least one of the preceding claims, **characterized in that** the acid-catalyzed, hydrolytic oxidative decomposition is carried out at temperatures in the range from 50 to 120°C.

15. The method as claimed in at least one of the preceding claims, **characterized in that** the acid-catalyzed, hydrolytic oxidative decomposition is carried out under pressures in the range from 100 to 1 030 mbar.

16. The method as claimed in at least one of the preceding claims, **characterized in that** 0.1 to 2.0 mole equivalents of at least one basic salt, based on the amount of acid employed, are added after the depolymerization.

17. The method as claimed in claim 16, **characterized in that** sodium carbonate and/or sodium bicarbonate is employed as basic salt.

## Revendications

1. Procédé de dépolymérisation d'éthers de cellulose par décomposition acide oxydante, **caractérisé en ce que** l'éther de cellulose broyé et séché est soumis à un acide gazeux ou est aspergé avec la solution d'un acide, et est, en même temps, mis en contact avec un agent oxydant ou avec une solution d'un agent oxydant, **en ce qu'**il est dépolymérisé à des températures dans la plage de 50 à 120 °C pendant une durée dans la plage de 0,01 à 10 heures et **en ce qu'**ensuite on neutralise l'acide par ajout d'une base, la teneur en eau du mélange réactionnel pendant la dépolymérisation ne devant pas dépasser 10 % en poids.

2. Procédé selon la revendication 1, **caractérisé en ce que** l'on utilise comme éther de cellulose la méthyl-, éthyl-, propyl-, hydroxyéthylméthyl-, hydroxypropylméthyl-, éthylhydroxyéthyl- ou éthylméthylcellulose.

3. Procédé selon la revendication 1 ou 2, **caractérisé en ce que** l'on utilise des éthers de cellulose, qui sont obtenus par
a) alcalinisation d'une cellulose avec 0,5 à 10 équivalents molaires d'alcali,
b) éthérification de l'alcalicellulose obtenue avec des agents d'éthérification,
c) réduction de la teneur en sels à moins de 0,5 % en poids par lavage de l'éther de cellulose avec de l'eau à une température supérieure au point de floculation de l'éther de cellulose et séparation de la matière solide de la solution de sel par centrifugation ou filtration, de sorte que le teneur en eau dans la matière solide se situe dans la plage de 25 à 80 % en poids, et
d) en même temps séchage et broyage de l'éther de cellulose humide à des températures dans la plage de 50 à 120 °C à l'aide d'un sécheur-broyeur, de sorte qu'il en résulte une teneur en humidité inférieure à 10 % en poids.

4. Procédé selon la revendication 3, **caractérisé en ce que** l'on utilise à l'étape a) une cellulose avec une teneur en cellulose α de 90 à 99,9 %.

5. Procédé selon au moins l'une des revendications précédentes, **caractérisé en ce que** l'éther de cellulose dépolymérisé présente une viscosité Höppler, mesurés à 2,0 % (sec absolu) dans l'eau à 20 °C, de ≤ 50 mPa·s.

6. Procédé selon au moins l'une des revendications précédentes, **caractérisé en ce que** l'on utilise comme acides des acides minéraux et/ou des acides organiques.

7. Procédé selon la revendication 6, **caractérisé en ce que** l'on utilise comme acides minéraux l'acide chlorhydrique, sulfurique, nitrique et/ou phosphorique.

8. Procédé selon la revendication 6, **caractérisé en ce que** l'on utilise comme acides organiques l'acide trifluoroacétique, l'acide acétique, l'acide formique, l'acide oxalique, l'acide phtalique, l'acide maléique et/ou l'acide benzoïque.

9. Procédé selon au moins l'une des revendications précédentes, **caractérisé en ce que** l'on utilise l'acide en une quantité dans la plage de 0,01 à 2 % en poids d'acide pur, par rapport à l'éther de cellulose mis en oeuvre.

10. Procédé selon au moins l'une des revendications précédentes, **caractérisé en ce que** l'on utilise comme agent oxydant des composés peroxo, l'ozone, des perborates, le chlorite de sodium, des halogènes et/ou des oxydes d'halogènes.

11. Procédé selon la revendication 10, **caractérisé en ce que** l'on utilise comme agent oxydant le peroxyde d'hydrogène.

12. Procédé selon la revendication 10, **caractérisé en ce que** l'on utilise comme agent oxydant l'ozone.

13. Procédé selon au moins l'une des revendications précédentes, **caractérisé en ce que** l'on utilise l'agent oxydant en une quantité de 0,01 à 3 % en poids, par rapport à l'éther de cellulose.

14. Procédé selon au moins l'une des revendications précédentes, **caractérisé en ce que** l'on effectue la décomposition hydrolytique oxydante, catalysée par un acide, à des températures dans la plage de 50 à 120 °C.

15. Procédé selon au moins l'une des revendications précédentes, **caractérisé en ce que** l'on effectue la décomposition hydrolytique oxydante, catalysée par un acide, à des pressions dans la plage de 100 à 1030 mbar.

16. Procédé selon au moins l'une des revendications précédentes, **caractérisé en ce que**, après la dépolymérisation, on ajoute 0,1 à 2,0 équivalents molaires d'au moins un sel basique, par rapport à la quantité d'acide mise en oeuvre.

17. Procédé selon la revendication 16, **caractérisé en ce que** l'on utilise comme sel basique le carbonate de sodium et/ou l'hydrogénocarbonate de sodium.
